# EUROPÄISCHE PATENTSCHRIFT

(11) **EP 2 997 802 B1**
(45) Veröffentlichungstag und Bekanntmachung des Hinweises auf die Patenterteilung: **30.08.2017**
(21) Anmeldenummer: 14003221.0
(22) Anmeldetag: 17.09.2014
(51) Int. Cl.: A01B 33/02, A01D 34/00

(54) **Landwirtschaftliche Arbeitsvorrichtung**
Agricultural working device
Dispositif de travail agricole

(43) Veröffentlichungstag der Anmeldung: 23.03.2016
(73) Patentinhaber: Müthing GmbH & Co. KG, 59955 Winterberg (DE)
(72) Erfinder: Löer, Hubertus, 59609 Anröchte (DE); Müthing, Michael, 59955 Winterberg (DE)
(74) Vertreter: Lichti - Patentanwälte Partnerschaft mbB

(56) Entgegenhaltungen:
- EP-A1- 1 472 926
- EP-A1- 2 052 596
- EP-A1- 2 476 309
- EP-A2- 0 598 266
- WO-A1-2005/009109
- DE-A1- 10 257 954

## Beschreibung

Die Erfindung betrifft eine landwirtschaftliche Arbeitsvorrichtung, insbesondere als Mulch-, Mulch-Mäh- oder Fräsvorrichtung mit einem Arbeitsrotor, mindestens einer Stützwalze und mindestens einer Schneidkante.

Derartige landwirtschaftliche Arbeitsvorrichtungen zum Abtrennen und Zerkleinern von Bodenbewuchs, wie Gras, aber auch Pflanzenstoppeln, fanden als Abtrenn- und Zerkleinerungsvorrichtungen, insbesondere als Mulch-, Mulch-Mäh-Vorrichtungen oder Bodenfräsen breite Anwendung unter anderem in der Brachflächen- und Landschaftspflege sowie der Landwirtschaft. Sie werden dort eingesetzt zum Mähen und Zerkleinern von Pflanzenaufwuchs, Pflanzenresten und Biomasse verschiedenster Art, wie beispielsweise Gras, Zwischenfrüchte, Pflanzenstoppeln von Getreide, Raps, Mais, Ästen oder Büschen. Dieses wird von der Arbeitsvorrichtung abgetrennt, aufgenommen, durch einen Arbeitsrotor zerkleinert und wieder auf den Boden zurückgeführt. Das zerteilte und verteilte Pflanzenmaterial auf dem Boden wird danach auf dem Boden belassen und verrottet schnell aufgrund seiner Beschaffenheit. Es dient damit auch als Dünger für den Boden, zur Humusbildung und für Feldhygienemaßnahmen.

Bei derartigen Abtrenn- und Zerkleinerungsvorrichtungen wie Mulch-, Mulch-Mäh- oder Bodenfräsgeräten, sind deren Komponenten am Gerät in der Regel örtlich fest angeordnet. Sie erlauben daher keine Justage der vorhandenen Komponenten durch Anpassung von beispielsweise ihrer Lage und/oder ihrer Orientierung im Gehäuse, was je nach Pflanzen- oder Pflanzenresten-, Zerkleinerungs- und Qualitätsanforderungen oder Feuchtigkeitsgrad sowie Feuchte des Bodens und dessen Anhaftungsvermögens unterschiedlich gehandhabt werden muss. Beispielsweise bei feuchtem Pflanzengut besteht die Gefahr, dass sich dieses am Gerätebereich im Innern des Gehäuses ansammelt. Dies kann die Arbeits- und Zerkleinerungsqualität und damit auch das Ergebnis des Arbeitsprozesses beeinträchtigen, aber auch zu Geräteschäden führen und den Energieeinsatz stark erhöhen.

Derartige Arbeitsgeräte weisen in der Regel bewegliche, positionierbare Teilelemente des Gerätegehäuses selbst oder rückseitige verstellbare Gehäuseklappen auf, die die Stabilität des Geräts beeinträchtigen und verstoßen in der Regel gegen gültige Sicherheitsnormen.

Die EP 1 472 926 A1 zeigt eine landwirtschaftliche Arbeitsvorrichtung zum Abtrennen von Bodenbewuchs in Form eines an sich - andersartigen - Spindelmähers mit einem als Schneidrad bezeichneten Arbeitsrotor 12 in Form einer Spindel, zwei Stützwalzen 24, 26 und damit eben auch mindestens einer Stützwalze sowie einer während des Betriebs in einer festen Arbeitsposition nahe der Spindel angeordneten Schneidkante 14a. Die Druckschrift strebt an, eine automatische Einstellung eines einzigen fest vorgegebenen Abstands der Schneidkante zum Arbeitsrotor zu ermöglichen und sieht hierzu vor, dass das Schneidrad relativ zur die Schneidkante 14a aufweisenden Schneideinheit 14 bestellt wird, bis ein Kontakt zwischen dem Schneidrad 12 und der Schneideinheit detektiert wird und das Schneidrad 12 von der Schneideinheit in einem schmalen vorbestimmten Abstand zurückverfahren wird (Anspruch 1).

Bei einer Vorrichtung ist jeweils nur das Verfahren in eine Arbeitsposition, nicht aber in zwei Arbeitspositionen oder Schneidabständen zwischen Schneidrotor und Schneidkante vorgesehen, insbesondere nicht in Anpassung an unterschiedliche extern gegebene Arbeitsverhältnisse. Es geht hier demgemäß darum, die zum Schnitt erforderliche Gegenschneide so zu führen, dass sie sich immer nahe an die Spindel anlegt, um den Schnitt überhaupt zu ermöglichen. Eine weitere Zerkleinerung findet hier nicht statt. Ein Schneidspalt verstellbar zum Zerkleinern des Schnittguts ist nicht vorgesehen.

Die EP 2 476 309 A1 zeigt eine nicht gattungsgemäße Vorrichtung zum Behandeln oder Bearbeiten von in schwach abgelegter Bodenstreu einer Geflügelfarm und damit eine Strohhäcksler und damit keine Vorrichtung zum Abtrennen von Bodenbewuchs. Sie weist zwar ebenfalls einen Arbeitsrotor an sich auf, der allerdings zur Aufnahme der Streu dient und dem eine - feste - Gegenschneide zugeordnet ist. Es ist eine Andruckwalze zum Andrücken der Streu auf den Boden einer Geflügelfarm vorgesehen, die keine Stützfunktion erfüllt. Die Andruckwalze kann sich nur in eine Richtung erstrecken und um wenige Grad um die vorgegebene Position nach oben und unten bewegen. Ein Bodenkratzer überstreift den Boden, um das dort liegende Stroh aufzunehmen und dem Rotor zuzuführen. Der Kratzer weist keine Verstellmöglichkeit auf, sondern ist oben bei der Anbringung und Befestigung am Gehäuse sogar noch gedämpft bzw. gefedert, um beweglich auf Bodenunebenheiten reagieren und sich anpassen zu können, was kein Abscheren von anhaftendem Material ermöglicht. Eine Materialzuführwalze in Front des Rotor oberhalb des zuzuführenden losen Materials, die das in Schwad auf dem Boden liegende Material nach unten drückt.

Die DE-A-102 57 954 betrifft ein Mähgerät mit zumindest einer als Glattwalze ausgebildeten um eine Drehachse drehbar angeordneten Stützwalze, die hinter den Mähwerkzeugen zur Bestimmung der Arbeitshöhenlage der Mähwerkzeuge angeordnet ist. Um für eine Stützwalze eines Mähgeräts ein dauerhaftes Anhaften von Mähgut auf der Oberfläche der Stützwalze in einfacher Weise zu verhindern, ist vorgesehen, dass die Drehachse der Stützwalze mit einem kleinen Winkel abweichend zur senkrecht zur Arbeitsrichtung verlaufenden Geraden verläuft. Um die Winkellage einstellen zu können, weist die Stützwalze eine verstellbare Halterung auf, mit welcher eben die Winkellage der Stützwalze zur senkrecht zur Arbeitsrichtung verlaufenden Geraden einstellbar ist. Somit handelt es sich um eine jeweils einseitige Verschwenkung leicht nach hinten für einen Schräglauf der Walze mit dem Ziel einen Reinigungseffekt mit durch die unvorteilhafte Schräglage der Walzen und den dadurch begründeten Seitenzugeffekt zu bewirken.

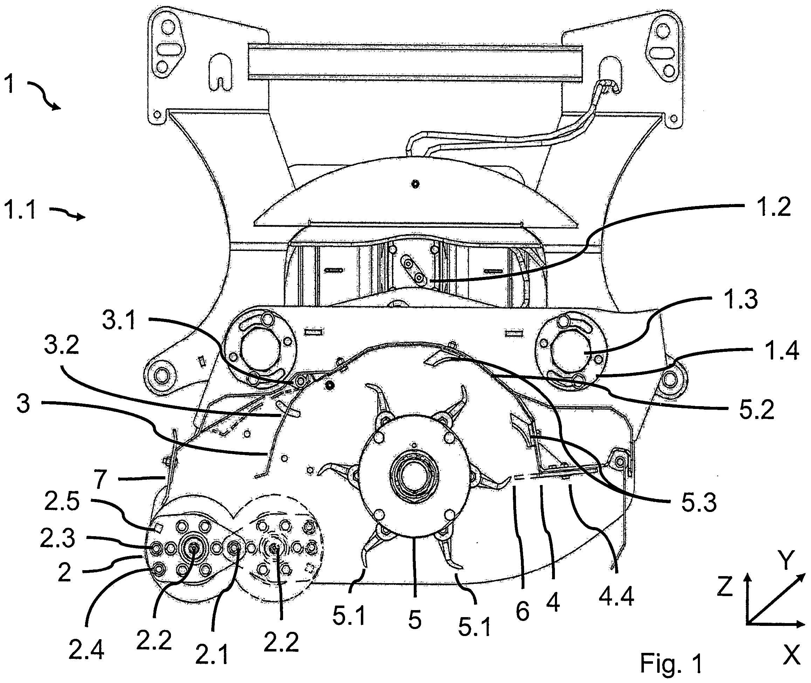

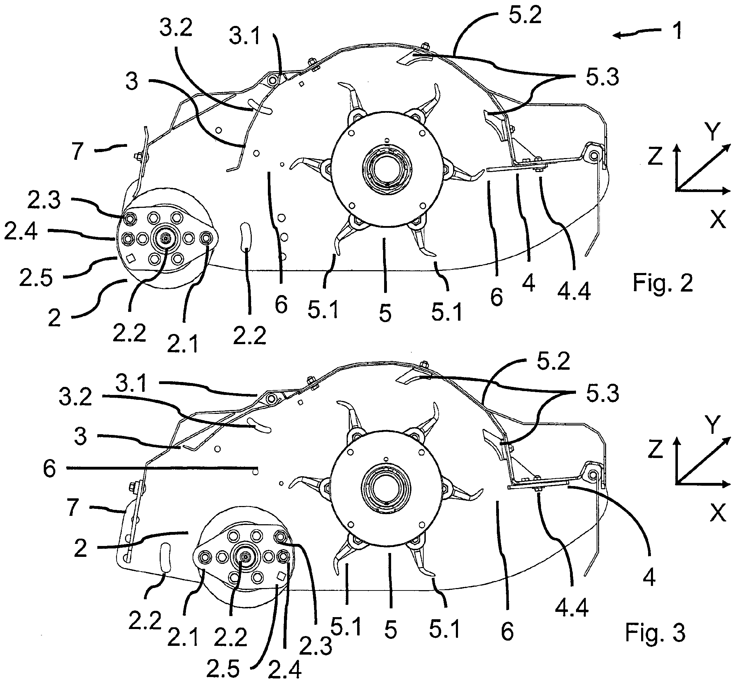

Die WO 2005/009109 A1 zeigt eine Vorrichtung zum Schneiden von Gras und anderen Pflanzenprodukten. Sie weist dabei einen Arbeitsrotor 15 auf, mit dem - anschließend - der Bodenbewuchs abgetrennt wird. In Arbeitsrichtung vor diesem Arbeitsrotor ist ein Stützrad 35 vorgesehen, das durch ein in den dort noch aufrecht stehenden Bewuchs hineinragendes Mantelblech vom Arbeitsrotor separiert ist (insbesondere Figur 1, rechts unten). Das Gerät weist weiterhin zum Häckseln des Schneidguts ein Schneidrad 16 mit Schneiden 22 auf. Die Ausgestaltung der Figuren 3 bis 5 zeigt ein schwenkbares Umlenkblech 25', durch welches das vom Arbeitsrotor aufgenommene Schneidgut zum weiteren Schneidrotor entweder in den Bereich, in dem die beiden Rotoren einander nahekommen oder aber in einer zurückgezogenen Position des Ableitbleches 25 den zweiten Schneidrotor hinweggefördert werden können. Insofern zeigt die Druckschrift - an sich - ein verstellbares Gutleitblech, das das unzerkleinerte Gut entweder nach unten fördert bzw. dem zweiten Rotor zuführt oder aber über diesen hinwegführt, so dass er keinerlei Arbeitsfunktion auf das Gut entfalten kann.

Die EP 2 052 596 A1 zeigt einen als Walzenmäher bezeichneten Spindelmotor mit zwei Stützrädern und einem Arbeitsrotor. Diesem ist ausschließlich zum Abtrennen des Bodenbewuchses bzw. zum Abtrennen des Schneidguts vom Boden ein Bodenmesser 110 mit einer Schneidkante 120 vorgesehen, die schwenkbar auf den Arbeitsrotor zu oder von diesem fort angeordnet ist. Abgesehen davon, dass diese Schneide wie bei einem Spindelmotor notwendig zum Abschneiden des Bodenbewuchses und nicht zum nachträglichen Zerkleinern dient, hat diese Schwenkbarkeit der Schneidkante aber lediglich zwei völlig andere Gründe: Das Messer soll vom Rotor weggeschwenkt werden, damit dieses ausgetauscht werden kann und auch bei Abnutzung der Schneidkanten soll immer ein einziger fester vorgesehener Schneidspalt einstellbar sein.

Hier geht es um den Schnitt selbst mit der Einschränkung, dass kein Schneidspalt entstehen darf und daher auch keine dauerhafte Öffnung für den Materialdurchfluss. Ebenfalls findet erneut keine Förderung und Zerkleinerung des Schnittgutes statt. Es bleibt unzerkleinert liegen und muss nach heutiger Praxis aufgesaugt werden, da ein Flächenkompostierungsprozess aufgrund des glatten Schnitts und der nicht erfolgten Zerkleinerung und Auffaserung nicht angemessen durchgeführt werden kann.

Die EP 598 266 A2 zeigt eine an einer Stützwalze angeordnete Abstreifereinrichtung.

Der Erfindung liegt die Aufgabe zugrunde, die unter Beseitigung der oben genannten Nachteile eine gattungsgemäße Arbeitsvorrichtung zu entwickeln, bei der bei der Arbeit wirksame Komponenten am Einsatzort einfach, schnell und kostengünstig verstellt werden können und insbesondere eine optimale Anpassung der Arbeitsvorrichtung und damit des Arbeitens derselben an unterschiedlichste Arbeitsverhältnisse, wie Witterungsverhältnisse, Feuchtigkeitsverhältnisse, Längenverhältnisse des Schnittguts und auch Bodenverhältnisse zu schaffen, so dass ein optimales Arbeitsergebnis erreicht wird, unabhängige davon, ob die Luftfeuchtigkeit hoch oder niedrig, das Schnittgut feucht oder trocken, der Bodenbewuchs kurz oder lang ist.

Die Aufgabe wird bei einer erfindungsgemäßen Vorrichtung gelöst durch die kennzeichnenden Merkmale des Anspruchs 1.

Eine Ausgestaltung der Erfindung sieht vor, dass die Stützwalze an Haltepunkten schwenkbar gehalten ist und um diese in ihre Haltepositionen schwenkbar ist. Eine der beiden Positionen kann sich dadurch auszeichnen, dass der Abstand der Stützwalze zu dem Arbeitsrotor gering ist. Dadurch treffen die austretenden Pflanzenreste in Fahrtrichtung hinter der Stützwalze auf den Boden. In dieser Position wird eine optimale Tiefenführung des Arbeitsrotors garantiert. Diese Position wird insbesondere bei trockenem leichtem Gut gewählt, das so von dem Arbeitsrotor leicht über die Stützwalze gefördert werden kann.

In einer zweiten Position kann die Stützwalze möglichst weit von dem vorhandenen Arbeitsrotor entfernt sein. In dieser Position wird das zerkleinerte Pflanzengut vor der Stützwalze auf den Boden abgelegt. Dies hat insbesondere bei feuchten Verhältnissen und feuchten, klebrigen Böden den Vorteil, dass die Stützwalze auf dem Pflanzenmaterial läuft, was insbesondere unter solchen Bedingungen Bodenhaftungen an der Stützwalze vermindert und in Zusammenwirkung mit einer Abstreiferschiene gänzlich verhindert, so dass damit auch eine gleichmäßige Tiefenführung des Gerätes über einen gleichbleibenden Winkeldurchmesser der Stützwalze sichergestellt ist. In Fahrtrichtung gesehen stützt die Stützwalze das Mulchgerät am hintersten Teil des Gehäuses ab und erhöht somit die Stabilität des gesamten Aufbaus, insbesondere bei unwegigem Gelände.

In einer vorteilhaften Ausführung der Erfindung kann die Stützwalze in ihren Haltepositionen jeweils über eine Führung tiefenverstellbar angebracht sein. Dies ermöglicht eine optimale Tiefenführung aller vorhandenen Komponenten entsprechend der Gegebenheiten des Einsatzfeldes, insbesondere der Gegebenheiten des vorhandenen Geländes und der gewählten unterschiedlichen Arbeits- und Schnitthöhe über dem Boden oder der Einwirktiefe in den Boden.

Die Stützwalze kann darüber hinaus stufig und stufenlos in die Haltepositionen bewegt werden. Dies ermöglicht die Freiheit, die ideale Position für den jeweils vorhandenen Anwendungsfall zu finden. So kann die Position der Stützwalze nach der Geländeform und dem gewünschten Arbeitsergebnis abgestimmt werden. Insbesondere in der vom Arbeitsrotor entfernten Position der Stützwalze wird in Verbindung mit einer Abstreiferschiene in einer engen Führung an der Stützwalze selbst der Austritt von Staub und Pflanzenresten aus dem Inneren der Arbeitsvorrichtung stark eingeschränkt, was zu einer erheblichen Verminderung der Staubbelastung nachfolgender Geräte oder Fahrzeuge führt, insbesondere in Bezug auf Kühlerverschmutzungen von Antriebsfahrzeugen mit Frontbau.

Es können mechanische Befestigungselemente und/oder hydraulische Komponenten zur Bewegung, Halterung und Fixierung der Stützwalze vorgesehen sein. Die Verwendung mechanischer Befestigungselemente erlaubt einen großen Spielraum in der Ausgestaltung der Haltevorrichtung für die Stützwalze, sowie eine effiziente Halterungs- und Verschiebungsmöglichkeit der Stützwalze. Der Ersatz durch oder die Ergänzung mit hydraulischen Elementen führt zu einem effektiven Verstellen und Halten der Stützwalze.

Durch die verschwenkbare Anordnung des Gutleitblechs kann Einfluss auf die Bewegung des Pflanzenmaterials im Innern des Gehäuses, den sogenannten Förderkanal genommen werden. Ist das Gutleitblech beispielsweise nahe zum Arbeitsrotor umgeschwenkt, so führt diese Anordnung das Pflanzenmaterial nahe an dem Arbeitsrotor vorbei, so dass es in dessen Nähe auf den Boden geleitet wird. Diese Stellung des Gutleitblechs ist insbesondere bei von dem Arbeitsrotor entfernt gestellter Stützwalze vorgesehen.

Wenn in einer alternativen Position des Gutleitblechs diese vom Arbeitsrotor fortgeschwenkt ist, so wird das Zerkleinerungsgut in größerem Abstand zum Arbeitsrotor befördert und gelangt somit weiter entfernt von diesem auf den Boden. Diese Position des Gutleitblechs korrespondiert mit zum Arbeitsrotor zugestellter Stützwalze. Diese Art der Vorrichtung führt zu einer vorteilhaften Geräteführung in räumlicher Nähe am Arbeitsrotor und zu einer luftigen Ablage des Zerkleinerungsgutes hinter der Stützwalze.

Eine Weiterbildung der Erfindung kann vorsehen, dass das Gutleitblech mit einer Halterung und/oder einer Verstelleinrichtung versehen ist. Die mechanische Ausgestaltung der erfindungsgemäßen Vorrichtung stellt eine einfache und effiziente Möglichkeit dar, das Gutleitblech zu verschieben. Im Hinblick auf die stufenlose Verstellung des Gutleitblechs liegt durch die Verwendung hydraulischer Komponenten eine weitere verschleißarme und effektive Methode hierzu vor.

Vorzugsweise kann die Bewegung des Gutleitblechs mit der Bewegung der Stützwalze gekoppelt sein. Dies ermöglicht beispielsweise, dass in einer definierten Position beider Komponenten das dem Mulchgerät austretende Schnittgut in Fahrtrichtung vor der Stützwalze auf den Boden gelangt, während es in einer anderen Positionierung der Komponenten an der Stützwalze vorbei gelenkt wird, sodass es in Fahrtrichtung gesehen hinter der Stützwalze auf den Boden gelangt.

Durch die erfindungsgemäß vorgesehene Verstellbarkeit der Schneidkante kann der Schneidspalt als Abstand zwischen Schneidkante und einem vorhandenen Arbeitsrotor verändert werden. Insbesondere kann dies im Hinblick auf das zu bearbeitende Pflanzenmaterial während des Einsatzes vorgenommen werden. Die Verstellung ermöglicht zum einen die Anpassung an die unterschiedlichen Gutkonsistenzen, aber auch die Erzeugung unterschiedlicher Arbeitsqualitäten und Arbeitseffizienzen, je nach Anforderung. Die hierdurch mögliche Schneidspaltvariation mit einfacher mechanischer Verstellung (auch hydraulisch möglich) bietet eine effiziente Anpassung an unterschiedliche Anforderungen sowie auch an unterschiedliche Leistungsanforderungen für die antreibenden Fahrzeuge.

Vorzugsweise kann eine verstellbare Schneidkante durch mechanische Vorrichtungen und/oder hydraulische Komponenten bewegt oder fixiert werden. Die Ausgestaltung durch mechanische Elemente erlaubt eine schnelle und zuverlässige Umstellung vor und während des Betriebes und eine dementsprechend schnelle Anpassung an die vorherrschenden Bedingungen.

Die Unterstützung oder der Ersatz der beteiligten mechanischen Komponenten mittels hydraulischer Vorrichtung steigert die Effizienz der erfindungsgemäßen Vorrichtung.

Ferner kann mindestens eine verstellbare Schneidkante ein gerades, gezacktes oder gewelltes Profil aufweisen. Der Profiltyp ist somit anpassbar an die Umstände des Einsatzes, insbesondere an die Konsistenz und Abmaße des zu bearbeitenden und zu zerkleinernden Pflanzenmaterials.. Dies erlaubt eine optimale Schnitt- und Zerkleinerungsqualität des zerkleinerten Biomasse.

Insbesondere kann das Profil der mindestens einen verstellbaren Schneidkante mit oder ohne Unterbrechungen ausgestaltet sein. Auf diese Weise ist eine weitergehende Anpassung an das vorhandene Pflanzenmaterial möglich sowie die vorteilhafte Austauschmöglichkeit einzelner Elemente. Außerdem ist ein gestaffelter Aufbau mit mehreren, hintereinander angebrachten, verstellbaren Schneidkanten möglich.

Außerdem ist vorgesehen, dass die Abstreiferschiene sich auf die gesamte Gehäusebreite mehrfach abstützt und so über eine hohe Stabilität und Arbeitsgenauigkeit verfügt gegenüber den herkömmlichen bekannten Abstreiferbalken mit einer ausschließlichen 2-Punkt-Befestigung nur an den äußeren Punkten der Stützwalze selbst, was aufgrund der mangelnden Stabilität zu Verbiegungen und mangelhafter Reinigungsfunktion führt.

Höchst vorzugsweise kann ein Mulch- oder Mulch-Mäh-Gerät oder eine Bodenfräse eine Verstellbarkeit von mindestens zwei oder alle vier der Komponenten Stützwalze, Abstreiferschiene, Gutleitblech und Schneidkante aufweisen. Derart ist ein hoher Grad an Freiheit zur Anpassung der flexiblen Komponenten während des Betriebs gegeben.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im Einzelnen erläutert sind. Dabei zeigen:
- Fig. 1: einen schematischen Querschnitt durch eine gesamte erfindungsgemäße Vorrichtung,
- Fig. 2: einen Querschnitt durch eine erfindungsgemäßen Vorrichtung mit Komponenten einer ersten definierten Position,
- Fig. 3: einen Querschnitt durch eine erfindungsgemäße Vorrichtung mit Komponenten einer zweiten definierten Position, und
- Fig. 4: eine Untersicht einer erfindungsgemäßen Vorrichtung.

Fig. 1 zeigt eine als Schlegelmulchgerät ausgestaltete Arbeitsvorrichtung 1. Im Folgenden wird zum Teil auf ein übliches kartesisches Koordinatensystem Bezug genommen, das rechts eingezeichnet ist: Dabei bezeichnet X die Längsachse in Fahrtrichtung, Y die Querachse und Z die Hochachse der Arbeitsvorrichtung 1.

Bei der erfindungsgemäßen Arbeitsvorrichtung 1, insbesondere in Form einer Mulchvorrichtung handelt es sich um ein Anbaugerät, das als Front- und/oder Heck-Anbaugerät in üblicher Weise über einen Dreipunkt-Anbaubock 1.1 an der Front oder am Heck eines Fahrzeugs, wie eines Traktors oder eines sonstigen Trägerfahrzeugs, anbringbar ist. Zur Abstützung weist die Mulchvorrichtung eine Stützwalze 2 auf. Diese ist in der einen, in der Zeichnung - linken - Position durchgehend, in ihrer anderen - in der Zeichnung rechten - Position gestrichelt dargestellt. Hierauf wird im Folgenden noch im Einzelnen eingegangen.

Als wesentliches Arbeitselement weist die Vorrichtung 1 einen Arbeitsrotor 5 auf, der über eine Antriebseinheit 1.2 angetrieben wird. Der Antrieb kann dabei über mechanische Getriebe mit seitlichen Verlängerungswellen, aber auch hydraulisch oder elektrisch erfolgen.

Für den Anbau an ein Fahrzeug ist an jeder Anbauseite insbesondere eine Verschiebeeinrichtung 1.3 für den Dreipunkt-Anbaubock vorgesehen, die horizontal Befestigungselemente 1.4, hier in Form fixierter Rohre vorsieht.

Die Stützwalze selbst ist drehbar an verschwenkbaren Halteplatten 2.4 gelagert, welche axial beidseits der Stützwalze 2 vorgesehen sind. Die Halteplatten 2.4 wiederum sind verschwenkbar um eine Schwenkachse 2.1 am Gehäuse der Vorrichtung 1 gelagert. In der Halteplatte 2.4 sind über deren Höhe (hier drei) Durchbrüche 2.5 vorgesehen, mittels derer die Halteplatte 2.4 in einer bestimmten Schwenkposition mit einer gewünschten Tiefe über dem Boden am Gehäuse mittels Schrauben 2.3 festlegbar ist. Die Höhe bzw. Tiefe der Halteplatte 2.4 und damit auch der Stützwalze 2 wird durch Wahl der Durchbrüche 2.5 eingestellt, über die die Befestigung mittels der Schraube 2.3 am Gehäuse erfolgt.

Der Arbeitsrotor 5 kann als Zylinder ausgestaltet sein und wird beispielsweise über eine Arbeitswelle eines Traktors angetrieben. Am Arbeitsrotor 5 sind Arbeitswerkzeuge 5.1 angebracht, welche im dargestellten Ausführungsbeispiel als schwenkbare Schlegel oder Arbeitsmesser ausgestattet sind. Diese sind radial nach außen verlaufende und gekrümmte Klingen. Andere Ausführungen wie gerade oder gebogene Messerklingen oder beispielsweise Plattenschlegel sind ebenfalls möglich und gebräuchlich. Sie dienen dazu, das Pflanzenmaterial vom Boden abzutrennen, aufzunehmen und zu zerkleinern. Dabei wird der Arbeitsrotor 5 entgegen der Fahrtrichtung angetrieben, im dargestellten Ausführungsbeispiel rotiert er somit linksdrehend um seine Achse in Querrichtung Y. Im oberen Bereich ist der Arbeitsrotor 5 durch eine bogenförmige Abdeckung 5.2 mit radialem Abstand umschlossen. An dieser befinden sich, zugewandt zum Arbeitsrotor 5, feste oder schwenkbare Gegenschneiden 5.3, die mit den Schlegeln oder Schneidmessern 5.1 des Arbeitsrotors 5 zur Erhöhung des Aufschlags- oder Zerkleinerungsgrades des Mulchgeräts 1 zusammenwirken.

Durch Lösen der Befestigungsschrauben 2.3 sowie durch Lockerung der Schraube im Haltepunkt 2.1 lässt sich die Stützwalze 2 um ca. 180° um die Schwenkachse 2.1 verschwenken. Die Stützwalze 2 kann insbesondere eine Position einnehmen, wie sie durchgezeichnet in Fig. 1 und auch in Fig. 2 dargestellt ist.

In der ersten Position der Stützwalze 2 gemäß Fig. 1 durchgezeichnet und in Fig. 2, befindet diese sich nahe einer am Gehäuse befestigten Abstreiferschiene 7. Die Abstreiferschiene 7 ist eine sich über die Breite der Stützwalze 2 erstreckende Schiene, die über ihre Lage mehrfach am Gehäuse abgestützt ist, um so sicherzustellen, dass es sich nicht durchbiegt und seinen Abstand zur Stützwalze 2 über die gesamte Länge des Arbeitsgeräts in Querrichtung Y konstant ist. Durch Lösen der mechanischen Befestigung kann die Abstreiferschiene 7 weiter nach unten geschoben werden und so eine zweite charakteristische Position gemäß Fig. 2 einnehmen.

Eine erste Position eines Gutleitblechs 3 ist ebenfalls in Fig. 1 und 2 dargestellt. Es ist im Innern des Gehäuses um eine Schwenkachse 3.1 schwenkbar, aber in geeigneten Schwenkpositionen angebracht. Dabei gibt eine Führungsvorrichtung 3.2 in Form von Langlöchern das Maß der Verschwenkbarkeit des Gutleitblechs 3 vor. Das Gutleitblech 3 ist mittels Schrauben in den Langlöchern 3.2 in gewünschten Positionen fixierbar. Zum Verschwenken des Gutleitblechs 3 werden die Schrauben der Führungsvorrichtung 3.2 gelöst, das Gutleitblech 3 in die gewünschte Position verschwenkt und danach sind die Schrauben wieder in der Führungsvorrichtung 3.2 (der Langlöcher) festgezogen. In Fig. 3 ist eine zweite charakteristische Position des Gutleitblechs 3 in Übereinstimmung mit der auf dem Arbeitsrotor 5 zugestellten Stützwalze 2 derart dargestellt, dass das Mulchgut vom Arbeitsrotor 5 über die Stützwalze 2 hinweg gefördert werden kann. Das Gutleitblech 3 ist hier zu der dem Arbeitsrotor 5 abgewanden stirnseitigen Innenseite des Gehäuses hin geschwenkt.

Fig. 1 zeigt eine dem Arbeitsrotor 5 auf der der Stützwalze 2 abgewandten Seite angeordnete Schneidkante 4. Sie erstreckt sich entlang des Arbeitsrotors 5 in Querrichtung Y und hat in Längs- oder Fahrtrichtung X der Vorrichtung eine endliche Breite. Sie ist am Gehäuse der Mulchvorrichtung 1 lösbar festgelegt. Sie kann über Befestigungselemente 4.4, welche hier als Schrauben ausgebildet sind, befestigt sein. Nach Lösen der Befestigungselemente 4.4 ist die Schneidkante in Fahrtrichtung X verschiebbar. Sie kann insbesondere so weit verschoben werden, bis der Abstand der Schneidkante 4 zum Arbeitsrotor 5 minimal (Fig. 2) oder maximal (Fig. 3) ist, wobei diese Endstellung durch die Lage entsprechender Langlöcher begrenzt ist. Auch jede Zwischenposition kann eingestellt werden.

Im Betrieb ist die Mulchvorrichtung 1 an einem Fahrzeug, beispielsweise einem Traktor, befestigt. Der Arbeitsrotor 5 wird über eine Arbeitswelle des Fahrzeugs angetrieben. Die Arbeitsvorrichtung 1 ist durch die Stützwalze 2 auf dem Boden abgestützt und bewegt sich mit dem Traktor in Fahrtrichtung X. Im Betrieb nehmen die Schlegel 5.1 des Arbeitsrotors 5 den Pflanzenaufwuchs ab und/oder nehmen das sich am Boden befindliche Pflanzengut auf und führen es durch die Drehbewegung des Arbeitsrotors 5 um der sich in Querrichtung Y erstreckende Achse zur Schneidkante 4. Die Position der Schneidkante 4 reguliert die Öffnung zum einen sich dahinter erstreckenden Förderkanal 6. Das sich infolge der Drehrichtung des Arbeitsrotors 5 entlang des Förderkanals 6 bewegende Schnittgut wird weiter zerkleinert, wozu auch die Gegenschneiden 5.3 im Mulchkörper dienen. Es gelangt folglich in den hinteren Bereich hinter den Arbeitsrotor 5. Durch die Position des Gutleitblechs 3 wird die weitere Förderung des zerkleinerten Schnittguts festgelegt.

In der ersten Position des Gutleitblechs 3 gemäß Fig. 1 und 2, wird das zerkleinerte Schnittgut um den Arbeitsrotor 5 herum geführt und gelangt zwischen diesem und der Stützwalze 2 zum Boden zurück. In dieser Position ist die Stützwalze 2 mit großem Abstand zum Arbeitsrotor 5 angeordnet, was Ablagerungen von Schüttgut auf der Stützwalze 2 während des Rückführens zum Boden vermeidet. Die nahe der Stützwalze 2 befindliche Abstreiferschiene 7 reinigt im Betrieb die Stützwalze 2 von eventuell anhaftenden Bodenteilen und verhindert dadurch die ansonsten diurch die Anhaftungen entstehende, unfreiwillige Verstellung der Arbeitshöhe.

Wenn es die Umstände erfordern, kann das Gutleitblech 3 in seine zweite Position verschwenkt werden. Dazu wird die Schraube in der Führungsvorrichtung 3.2 gelöst und das Gutleitblech 3 um die Lagerung 3.1 entlang der Führungsvorrichtung 3.2 verschwenkt und anschließend wieder auf ihrer endgültigen Position durch die Schraube der Führungsvorrichtung 3.2 fixiert werden. Damit nimmt das Gutleitblech 3 seine zweite Position ein. In dieser Position liegt es fast an der Innenwand des Gehäusekörpers 1 an.

Zusätzlich wird die Stützwalze 2 in ihre zweite Position gebracht: Dazu werden die Befestigungsschrauben 2.3 entfernt und die Stützwalze 2 um 180° um die Achse in Querrichtung Y um die Schwenkachse 2.1 geschwenkt. Sie erreicht somit die in Fig. 3 dargestellte Position. Hier werden die Befestigungsschrauben 2.3 angebracht und die Stützwalze 2 in dieser Position fixiert.

Darüber hinaus werden die zur Befestigung der Abstreiferschiene 7 vorgesehenen Schrauben gelöst und die Abstreiferschiene 7 nach unten verschoben, um so das Gehäuse an der Stirnseite zu schließen, wobei sie ihre in Fig. 3 dargestellte Position einnimmt. Hier wird sie wieder durch Schrauben fixiert.

Durch diese geänderte Anordnung ist der Förderkanal 6 des passierenden Schnittguts umgestaltet. Das den Arbeitsrotor 5 passierende und zerkleinerte Schnittgut gelangt durch den geänderten Förderkanal 6 in Fahrtrichtung X gesehen hinter der Stützwalze 2 bzw. auf deren dem Arbeitsrotor 5 abgewandten Seite auf den Boden. Außerdem wird so der Austritt von Staub und zerkleinerten Pflanzenteilen und die Verschmutzung der nachfolgenden Fahrzeuge und Geräte vermindert.

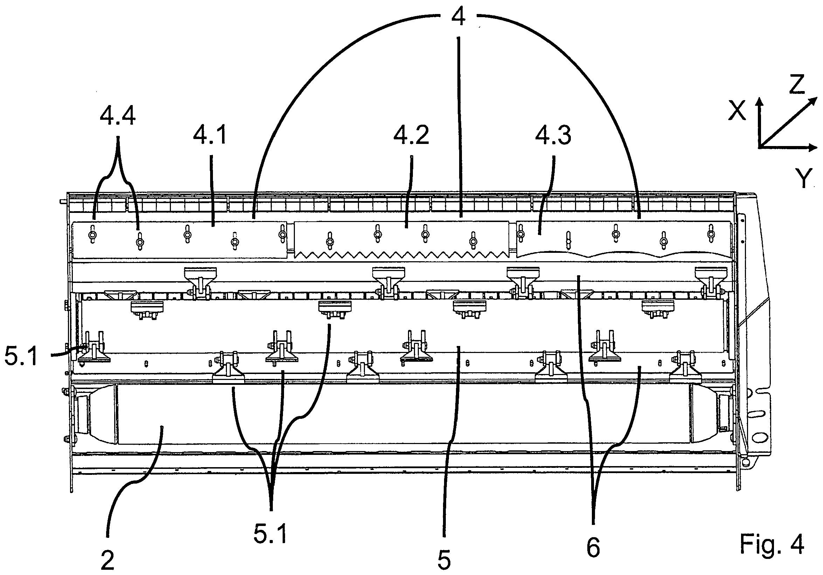

Fig. 4 zeigt verschiedene Ausgestaltungen einer oder mehrerer Schnittkanten 4. Links ist ein gerades Profil 4.1, in der Mitte ein gezacktes Profil 4.2 und rechts ein gewelltes Profil 4.3 dargestellt, welche jeweils durch Befestigungselemente 4.4 am Gehäusekörper 1 angebracht sind. Entgegen der Fahrtrichtung X schließt sich hieran der Arbeitsrotor 5 mit hierauf angebrachten Schlegeln 5.1 in gestaffelter Anordnung. Dahinter ist die Stützwalze 2 ersichtlich.

## Patentansprüche

1. Landwirtschaftliche Arbeitsvorrichtung zum Abtrennen von Bodenbewuchs, insbesondere als Mulch-, Mulch-Mäh- oder Fräsvorrichtung, mit einem Arbeitsrotor, mindestens einer Stützwalze (2) und mindestens einer Schneidkante (4), **gekennzeichnet durch** die Positionierbarkeit der mindestens einen Stützwalze (2) in mindestens zwei Haltepositionen in Längsrichtung der Vorrichtung und durch mindestens ein verstellbares Gutleitblech (3), wobei die Bewegung des Gutleitblechs (3) synchron mit der Bewegung der Stützwalze (2), insbesondere durch Kopplung, erfolgt, dass bei von dem Arbeitsrotor (5) entfernter Halteposition der Stützwalze (2) das Gutleitblech (3) zum Ausfördern von Mulchgut zwischen Arbeitsrotor (5) und Stützwalze (2) eingestellt ist und bei auf den Arbeitsrotor (5) zugestellter Stützwalze das Gutleitblech (3) zum Ausfördern des Mulchguts auf der dem Arbeitsrotor abgewandten Seite der Stützwalze (2) eingerichtet ist und dass zum Verändern eines Schneidguts zwischen der mindestens einen Schneidkante (4) und Arbeitsrotor (5) mindestens eine Schneidkante (4) in Stufen oder stufenlos relativ zum Arbeitsrotor (5) verstellbar angeordnet ist und dass das Gutleitblech (3) verschwenkbar angebracht ist.

2. Vorrichtung nach Anspruch 1, **dadurch gekennzeichnet, dass** die Stützwalze (2) an Haltepunkten (2.1) schwenkbar gehalten ist und um diese in ihre Haltepositionen schwenkbar ist.

3. Vorrichtung nach Anspruch 1 oder 2, **dadurch gekennzeichnet, dass** die Stützwalze (2) in einer ihrer Haltepositionen über eine Führung (2.2) tiefenverstellbar ist.

4. Vorrichtung nach einem der Ansprüche 1 bis 3, **dadurch gekennzeichnet, dass** die Stützwalze (2) in Stufen oder stufenlos in unterschiedliche Haltepositionen bewegbar ist.

5. Vorrichtung nach einem der vorangehenden Ansprüche, **dadurch gekennzeichnet, dass** die Stützwalze durch Befestigungselemente (2.3), insbesondere mechanische, gehalten ist.

6. Vorrichtung nach einem der vorangehenden Ansprüche, **dadurch gekennzeichnet, dass** eine hydraulische Vorrichtung zum Bewegen und Halten der Stützwalze (2) vorgesehen ist.

7. Vorrichtung nach einem der Ansprüche 1 bis 6, **dadurch gekennzeichnet, dass** das Gutleitblech (3) mit einer Halterung (3.1) und/oder einer Verstelleinrichtung (3.2) versehen ist.

8. Vorrichtung nach einem der Ansprüche 1 bis 7, **dadurch gekennzeichnet, dass** zum Verstellen und Halten des Gutleitblechs (3) mechanische Einrichtungen oder hydraulische Zylinder vorgesehen sind.

9. Vorrichtung nach einem der Ansprüche 1 bis 8, **dadurch gekennzeichnet, dass** die synchrone Bewegung des Gutleitblechs (3) derart mit der Bewegung der Stützwalze (2) durch Kopplung erfolgt.

10. Vorrichtung nach einem der vorangehenden Ansprüche, **dadurch gekennzeichnet, dass** die mindestens eine Schneidkante (4) durch eine mechanische und/oder hydraulische Einrichtung (4.4) bewegbar und/oder fixierbar ist.

11. Vorrichtung nach einem der vorangehenden Ansprüche, **dadurch gekennzeichnet, dass** die mindestens eine Schneidkante (4) ein gerades (4.1), gezacktes (4.2) oder gewelltes (4.3) Profil aufweist.

12. Vorrichtung nach einem der vorangehenden Ansprüche, **dadurch gekennzeichnet, dass** eine Abstreiferschiene (7) verstellbar an einem Gehäuse angebracht ist.

13. Vorrichtung nach Anspruch 12, **dadurch gekennzeichnet, dass** die Abstreiferschiene (7) sich mehrfach auf die gesamte Gehäusebreite abstützt.

## Claims

1. Agricultural working device for severing undergrowth, in particular as a mulching device, mulching and mowing device or rotary-cutter tillage device, with a working rotor, at least one supporting roller (2) and at least one cutting edge (4), **characterized by** the positionability of the at least one supporting roller (2) in at least two holding positions in the longitudinal direction of the device and by at least one adjustable material guide plate (3), wherein the movement of the material guide plate (3) takes place synchronously with the movement of the supporting roller (2), in particular by means of coupling, in that, in the case of a holding position of the supporting roller (2) that is remote from the working rotor (5), the material guide plate (3) is set for discharging mulched material between working rotor (5) and supporting roller (2), and, in the case of a supporting roller positioned on the working rotor (5), the material guide plate (3) is set up for discharging the mulched material on that side of the supporting roller (2) which faces away from the working rotor, and in that, in order to change a cutting material between the at least one cutting edge (4) and working rotor (5), at least one cutting edge (4) is arranged so as to be adjustable in stages or in an infinitely variable manner relative to the working rotor (5), and in that the material guide plate (3) is attached in a pivotable manner.

2. Device according to Claim 1, **characterized in that** the supporting roller (2) is held pivotably at holding points (2.1) and is pivotable about the latter into its holding positions.

3. Device according to Claim 1 or 2, **characterized in that** the supporting roller (2) is adjustable in depth in one of its holding positions via a guide (2.2).

4. Device according to one of Claims 1 to 3, **characterized in that** the supporting roller (2) is movable in stages or in an infinitely variable manner into different holding positions.

5. Device according to one of the preceding claims, **characterized in that** the supporting roller is held, in particular mechanically, by fastening elements (2.3).

6. Device according to one of the preceding claims, **characterized in that** a hydraulic device is provided for moving and holding the supporting roller (2).

7. Device according to one of Claims 1 to 6, **characterized in that** the material guide plate (3) is provided with a holder (3.1) and/or an adjustment unit (3.2).

8. Device according to one of Claims 1 to 7, **characterized in that** mechanical units or hydraulic cylinders are provided for adjusting and holding the material guide plate (3).

9. Device according to one of Claims 1 to 8, **characterized in that** the synchronous movement of the material guide plate (3) takes place together with the movement of the supporting roller (2) by means of coupling.

10. Device according to one of the preceding claims, **characterized in that** the at least one cutting edge (4) is movable and/or fixable by means of a mechanical and/or hydraulic unit (4.4).

11. Device according to one of the preceding claims, **characterized in that** the at least one cutting edge (4) has a profile which is rectilinear (4.1), serrated (4.2) or corrugated (4.3).

12. Device according to one of the preceding claims, **characterized in that** a scraper bar (7) is attached adjustably to a housing.

13. Device according to Claim 12, **characterized in that** the scraper bar (7) is repeatedly supported over the entire width of the housing.

## Revendications

1. Dispositif de travail agricole pour couper la couverture de végétation au sol, notamment sous la forme d'un dispositif de paillage, de broyage et paillage ou de fraisage, avec un rotor de travail, au moins un rouleau d'appui (2) et au moins une arête tranchante (4), **caractérisé par** la capacité de positionnement de l'au moins un rouleau d'appui (2) dans au moins deux positions d'arrêt dans la direction longitudinale du dispositif et par au moins une tôle conductrice de produit (3) déplaçable, le mouvement de la tôle conductrice de produit (3) se produisant de façon synchrone avec le mouvement du rouleau d'appui (2), notamment par couplage, qu'en cas de position d'arrêt du rouleau d'appui (2) éloignée du rotor de travail (5), la tôle conductrice de produit (3) est réglée pour extraire le mulch entre le rotor de travail (5) et le rouleau d'appui (2) et qu'en cas de rouleau d'appui placé sur le rotor de travail (5), la tôle conductrice de produit (3) est conçue pour extraire le mulch, sur le côté du rouleau d'appui (2) opposé au rotor de travail et que pour changer un produit coupé entre l'au moins une arête tranchante (4) et le rotor de travail (5), au moins une arête tranchante (4) est disposée de façon à pouvoir être déplacée par paliers ou en continu par rapport au rotor de travail (5) et que la tôle conductrice de produit (3) est disposée de façon à pouvoir pivoter.

2. Dispositif selon la revendication 1, **caractérisé en ce que** le rouleau d'appui (2) est maintenu de façon à pouvoir pivoter au niveau des points d'arrêt (2.1) et peut basculer, autour de ceux-ci, dans ses positions d'arrêt.

3. Dispositif selon la revendication 1 ou 2, **caractérisé en ce que** le rouleau d'appui (2) peut être déplacé en profondeur dans une de ses positions d'arrêt via un guide (2.2).

4. Dispositif selon l'une quelconque des revendications 1 à 3, **caractérisé en ce que** le rouleau d'appui (2) peut être déplacé par paliers ou en continu dans différentes positions d'arrêt.

5. Dispositif selon l'une quelconque des revendications précédentes, **caractérisé en ce que** le rouleau d'appui est maintenu par des éléments de fixation (2.3), notamment mécaniques.

6. Dispositif selon l'une quelconque des revendications précédentes, **caractérisé en ce qu'**un dispositif hydraulique est prévu pour déplacer et arrêter le rouleau d'appui (2).

7. Dispositif selon l'une quelconque des revendications 1 à 6, **caractérisé en ce que** la tôle conductrice de produit (3) est pourvue d'une fixation (3.1) et/ou d'un dispositif de déplacement (3.2).

8. Dispositif selon l'une quelconque des revendications 1 à 7, **caractérisé en ce que** des dispositifs mécaniques ou des cylindres hydrauliques sont prévus pour le déplacement et l'arrêt de la tôle conductrice de produit (3).

9. Dispositif selon l'une quelconque des revendications 1 à 8, **caractérisé en ce que** le mouvement synchrone de la tôle conductrice de produit (3) est réalisé par couplage avec le mouvement du rouleau d'appui (2).

10. Dispositif selon l'une quelconque des revendications précédentes, **caractérisé en ce que** l'au moins une arête tranchante (4) peut être déplacée et/ou fixée au moyen d'un dispositif (4.4) mécanique et/ou hydraulique.

11. Dispositif selon l'une quelconque des revendications précédentes, **caractérisé en ce que** l'au moins une arête tranchante (4) comporte un profilé droit (4.1), en zigzag (4.2) ou ondulé (4.3).

12. Dispositif selon l'une quelconque des revendications précédentes, **caractérisé en ce qu'**un rail déflecteur (7) est placé de façon réglable au niveau d'un carter.

13. Dispositif selon la revendication 12, **caractérisé en ce que** le rail déflecteur (7) s'appuie en plusieurs points sur la largeur totale du boîtier.
